Europäisches Patentamt

European Patent Office

Office européen des brevets

(19)

(11) **EP 1 202 794 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(21) Anmeldenummer: **00945762.3**

(22) Anmeldetag: **16.06.2000**

(51) Int Cl.$^7$: **B01D 69/14**, B01D 67/00

(86) Internationale Anmeldenummer:
**PCT/EP00/05552**

(87) Internationale Veröffentlichungsnummer:
**WO 01/003815 (18.01.2001 Gazette 2001/03)**

(54) **MEMBRANE ALS VERBUNDMEMBRANE ZUR TRENNUNG VON GELÖSTEN UND SUSPENDIERTEN STOFFEN SOWIE GELÖSTEN SALZEN VON IHRER TRÄGERFLÜSSIGKEIT**

MEMBRANE USED AS A COMPOSITE MEMBRANE FOR THE SEPARATION OF DISSOLVED AND SUSPENDED SUBSTANCES AND DISSOLVED SALTS FROM THEIR CARRIER LIQUID

MEMBRANE SOUS FORME DE MEMBRANE COMPOSITE POUR LA SEPARATION DE MATIERES DISSOUTES ET EN SUSPENSION AINSI QUE DE SELS DISSOUS CONTENUS DANS UN LIQUIDE PORTEUR

(84) Benannte Vertragsstaaten:
**AT BE CH CY DE DK ES FI FR GB GR IE IT LI LU MC NL PT SE**

(30) Priorität: **09.07.1999 DE 19931846**

(43) Veröffentlichungstag der Anmeldung:
**08.05.2002 Patentblatt 2002/19**

(73) Patentinhaber: **Neubert, Susanne**
**71134 Aidlingen (DE)**

(72) Erfinder:
• **NEUBERT, Joachim**
**D-71134 Aidlingen (DE)**
• **TALLAFUSS, Peter**
**D-71258 Weil der Stadt (DE)**
• **STAAB, Karl F.**
**D-71263 Weil der Stadt (DE)**

(74) Vertreter: **Neubauer, Hans-Jürgen, Dipl.-Phys.**
**Neubauer - Liebl**
**Patentanwälte**
**Fauststrasse 30**
**85051 Ingolstadt (DE)**

(56) Entgegenhaltungen:
**EP-A- 0 241 995**     **EP-A- 1 020 276**
**WO-A-99/16603**      **DE-A- 4 210 413**
**FR-A- 2 099 286**     **NL-A- 9 101 609**
**US-A- 4 865 739**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft eine Membrane als Verbundmembrane zur Trennung von gelösten und suspendierten Stoffen sowie gelösten Salzen von ihrer Trägerflüssigkeit nach dem Oberbegriff des Anspruchs 1.

Eine vorbekannte, gattungsgemäße Membrane als Verbundmembrane (DE 42 10 413 A1) besteht aus einem flächigen Trägerkörper mit relativ großen Durchströmöffnungen auf dem schichtweise eine Trennfunktionsschicht aufgebracht ist, die aus einem Verbund aus einem körnigen Füllstoff und einem Bindemittel besteht.

Dabei stellt der Trägerkörper ein poröses Stützgerüst dar für eine Trennfunktionsschicht aus gebundenem, pulverförmigen Füllstoff, wobei die Pulverkörper und das Bindemittel so beschaffen sind, daß die Trennfunktionsschicht Durchlaßöffnungen aufweist, durch die die Trägerflüssigkeit kontinuierlich passieren kann, wogegen die abzutrennenden Stoffe im wesentlichen zurückgehalten werden.

Bei einer konkreten Ausführungsform einer solchen Membrane wird die Funktionsschicht bei der Herstellung in mehreren Schichten aufgetragen, wobei nach jedem Auftragen ein Trocknen und Ausheizen sowie Sintern der Schicht erfolgt. Diese aufgebrachten Schichten sind hinsichtlich ihrer Struktur und Zusammensetzung jeweils gleich, so daß hier der schichtweise Aufbau nur zur Herstellung einer insgesamt größeren Schichtdicke mit einer insgesamt hinsichtlich ihrer Struktur und Zusammensetzung gleichen Trennfunktionsschicht verwendet wird.

Allgemein sind Membranen zur Trennung von Lösungen und Suspensionen aus vielfältigen Membranmaterialien bekannt, die in der Regel eine gute Trennwirkung, jedoch einen geringen Flux auch bei erhöhtem Transmembrandruck aufweisen. Unter Flux bzw. Flux-Leistung wird hier die durch die Membran durchgehende Trägerflüssigkeit in $1/(m^2 \times h)$ oder $m^3/[m^2 \times h]$ verstanden. Die Flux-Minderung bei niederen Überströmgeschwindigkeiten bei diesen allgemein bekannten Membranen wird dadurch hervorgerufen, daß bei höheren Überströmgeschwindigkeiten verbunden mit hohem Reibungsverlust der Energieverbrauch stark ansteigt und daher nur niedrige Strömgeschwindigkeiten wirtschaftlich sind. Als Überströmgeschwindigkeit in m/s wird die Geschwindigkeit verstanden, mit der die die suspendierten Stoffe enthaltende Flüssigkeit über die Membranfläche strömt. Bei niedrigen Überströmgeschwindigkeiten neigen solche allgemein bekannten Membranen zu einem Fouling, d. h. zu einem Absetzen der abgetrennten Substanzen auf der Membranfläche, wodurch eine weitere ungünstige Minderung des Flux wegen des gesteigerten Widerstandes erfolgt.

Mit der aus der gattungsgemäßen Membran nach der DE 42 10413 Al bekannten Mischung von Bindemittel und Füllstoff, insbesondere im konkret angegeben Verhältnis von 30% zu 70% ergeben sich grundsätzlich günstigere Bedingungen gegenüber den vorstehenden, allgemein bekannten Membranen hinsichtlich des inneren Fließwiderstands der Membran, welche jedoch mit steigender Anzahl der gleichstrukturierten Aufbauschichten und damit der Schichtdicke der Trennfunktionsschicht nachteilig wieder vermindert werden. Bei dem konkret angegebenen Bindemittel Polyethersulfon ergibt sich zudem noch ein Nachteil im Hinblick auf die Hydrophilie der Membrane.

Bei einer weiteren, gattungsgemäßen Kompositmembrane (US 4,865,739) mit einer mehrlagigen Trennfunktionsschicht weisen die einzelnen Trennungsfunktionsschichten unterschiedliche Größen der Füllstoffteilchen auf. Es wird aber nichts über die Mengen der Füllstoffteilchen in den einzelnen Lagen ausgesagt, insbesondere nicht, in welcher Richtung zur Trägerlage ihre Menge zu- bzw. abnehmen soll. Als Problem wird die mechanische Stärke der Membrane angegeben.

Aufgabe der Erfindung ist es, eine gattungsgemäße Membran so weiterzubilden, daß der innere Fließwiderstand der Membrane ohne Verminderung der Rückhaltewirkung auf die abzuscheidenden Substanzen bei zugleich geringerer erforderlicher Überströmgeschwindigkeit reduzierbar und damit der Flux entsprechend vergrößerbar ist.

Diese Aufgabe wird mit den Merkmalen des Anspruchs 1 gelöst.

Gemäß Anspruch 1 ist die Trennfunktionsschicht aus mindestens zwei übereinanderliegend miteinander verbundenen Aufbauschichten unterschiedlicher Struktur gebildet. Dabei enthalten die aufeinander auf den Trägerkörper aufgebrachten Aufbauschichten jeweils aufeinanderfolgend und abgestuft einen geringeren Füllstoffanteil und entsprechend höheren Bindemittelanteil im Vergleich mit einer davorliegenden Aufbauschicht. In der in einer Trennanlage eingebauten Funktionsstellung der Membran ist die Trennfunktionsschicht so ausgerichtet, daß die Aufbauschicht mit dem geringsten Füllstoffanteil mit der die abzutrennenden Substanzen enthaltenen Flüssigkeit beaufschlagt ist und entsprechend die Aufbauschicht mit dem höchsten Füllstoffanteil zu der von diesen Substanzen getrennten Trägerflüssigkeit hin liegt.

Mit einer so aufgebauten Membrane kann abgestimmt auf den jeweiligen Einsatz der Flux gesteigert werden ohne daß es eine Steigerung des erforderlichen Transmembrandrucks im Vergleich zu bekannten Membranen bedarf. Gleichzeitig kann die notwendige Überströmgeschwindigkeit der die abzutrennenden Stoffe enthaltenden Flüssigkeit merklich ohne Verminderung des Flux vermindert werden.

Zudem ist bei dem erfindungsgemäßen Membranaufbau die Temperaturstabilität der Membran bei Verwendung für den jeweiligen Anwendungsfall geeigneter Materialien, wie sie weiter unten angegeben sind, sichergestellt. Ebenso kann bei einer geeigneten Auswahl verwendeter organischer Anteile eine Beständigkeit gegenüber Chemikalien in der zu trennenden Flüssigkeit erreicht werden.

Eine weitere Maßnahme zur Steigerung der vorgenannten Vorteile besteht nach Anspruch 2 darin, daß die aufeinander aufgebrachten Aufbauschichten jeweils aufeinanderfolgend und abgestuft bei einem geringeren Füllstoffanteil entsprechend auch eine geringere Korngröße der Füllstoffe aufweisen.

Der Trägerkörper mit großporigen Durchlässen wird hier im wesentlichen als Stützgerüst für die Trennfunktionsschicht verwendet, so daß der Trägerkörper die Membranfunktion nicht unmittelbar beeinflußt und je nach dem verwendeten Herstellungsverfahren in die Trennfunktionsschicht integriert sein kann. Für eine einfache Herstellung werden nach Anspruch 3 jedoch die Aufbauschichten nacheinander auf einer Seite des Trägerkörpers aufgebaut, wobei dann der Trägerkörper mit seinen großporigen Durchlässen im Einbauzustand der Membran zu der abgetrennten Trägerflüssigkeit hin weist.

Mit den Merkmalen des Anspruchs 4 wird eine Membran mit zwei Aufbauschichten beansprucht, die mit den angegebenen Bindemittelanteilen und Füllstoffanteilen hervorragend als Ultrafiltrationsmembrane einsetzbar ist. Die Bindemittelanteile und Füllstoffanteile sind je nach dem Verwendungsfall innerhalb der angegebenen Gewichtsprozentgrenzen anzupassen.

In Verbindung mit einem solchen Membranaufbau aus zwei Aufbauschichten werden zudem vorteilhaft die im Anspruch 6 angegebenen Korngrößen für den Füllstoff in den einzelnen Aufbauschichten verwendet. Bei diesen Kombinationen werden besonders effektiv arbeitende Ultrafiltrationsmembrane zur Verfügung gestellt.

Wenn auf eine solche vorstehend genannte Ultrafiltrationsmembrane eine dritte Aufbauschicht mit den in Anspruch 5 angegebenen Bindemittel- und Füllstoffanteilen aufgebracht wird, die insbesondere noch die in Anspruch 7 angegebene Korngrößen für den Füllstoff aufweist, werden besonders effektive Nanofiltrationsmembrane geschaffen.

Der vorstehend beschriebene Aufbau für Ultrafiltrationsmembrane und Nanofiltrationsmembrane führt insbesondere zur Ausbildung größerer Kanäle innerhalb der Gesamtheit der Trennfunktionsschicht im Vergleich zu bekannten Membranen und führt dadurch bei hohem Flux zu einem niedrigen erforderlichen Transmembrandruck.

Eine Erhöhung der Überströmgeschwindigkeit bei einem solchen Aufbau führt weiter zu einer Flux-Erhöhung, die sich mittels der Formel

$$\text{Flux} = \text{Flux}_0 \cdot e^{kRe'}$$

beschreiben läßt. In dieser Formel ist $Re'$ eine modifizierte Reynoldszahl, $k$ ein Proportionalitätsfaktor und $\text{Flux}_0$ der rechnerische Flux bei der Überströmgeschwindigkeit = 0. Durch die Erhöhung der Überströmgeschwindigkeit wird ein Fouling ausgeschlossen und gleichzeitig die Ausbildung von Ablagerungen innerhalb der laminaren Grenzschicht minimiert und dadurch auch der sich daraus ergebende zusätzliche Filterwiderstand.

Nach Anspruch 8 kann je nach Einsatzfall insbesondere zur Erzeugung einer Umkehrosmose vorteilhaft die letzte Aufbauschicht nur aus Bindemittel ohne Füllstoff bestehen.

Als Füllstoffe können nach Anspruch 9 je nach den Anforderungen an die Membrane, insbesondere nach Temperaturbeständigkeit, chemischer Beständigkeit und Druckfestigkeit in Verbindung mit der Trägerflüssigkeit und den abzutrennenden Substanzen, mit guten Ergebnissen Oxide, Keramiken, Alaun, Graphit oder ggf. auch granulierte, feinstgemahlene Kunststoffe verwendet werden. Diese Füllstoffe können je nach Anwendungsfall der Membrane materialeinheitlich oder ggf. auch als Mischung eingesetzt werden.

Als Bindemittel können gemäß der Ansprüche 10 bis 15 sowohl hydrophile Polysulfone, hydrophile Polyvinilidinfluoride, hydrophile Polyaramide, hydrophile Polyamide als auch hydrophile Polyolefine und hydrophile Polyimide eingesetzt werden. Die Verwendung der jeweiligen Bindemittel ist dabei abhängig vom konkreten Einsatz der Membran und dabei insbesondere nach der Forderung nach Temperaturbeständigkeit, der chemischen Beständigkeit und der Druckfestigkeit.

Nach den Ansprüchen 16 bis 22 können als Trägermaterialien für den Membranaufbau sowohl Mikrosiebgewebe aus veredelten Metallen oder Kunststoffen, Keramikfilter oder Kunststofffilter mit großer Porenweite als auch Glasfasergewebe sowie Vliese aus textilem Material oder Kunststoffmaterial Verwendung finden. Auch hier hat die Auswahl der Trägermaterialien nach den jeweiligen Einsatzbedingungen zu erfolgen.

Die erfindungsgemäßen Membranausführungen sind insbesondere bei der Abwasserreinigung mit Erfolg einsetzbar.

**Patentansprüche**

**1.** Membrane als Verbundmembrane zur Trennung von gelösten und suspendierten Stoffen sowie gelösten Salzen von ihrer Trägerflüssigkeit,
bestehend aus einem flächigen Trägerkörper mit relativ großen Durchströmöffnungen auf dem schichtweise eine Trennfunktionsschicht aufgebracht ist, die aus einem Verbund aus einem körnigen Füllstoff und einem Bindemittel besteht,

**dadurch gekennzeichnet,**

**dass** die Trennfunktionsschicht aus mindestens zwei übereinanderliegend miteinander verbundenen Aufbauschichten unterschiedlicher Struktur gebildet ist dergestalt, dass die aufeinander auf den Trägerkörper aufgebrachten Aufbauschichten jeweils aufeinanderfolgend und abgestuft einen geringeren Füllstoffanteil und entsprechend höheren Bindemittelanteil im Vergleich mit einer davorliegenden Aufbauschicht enthalten.

2. Membrane nach Anspruch 1, **dadurch gekennzeichnet, daß** die aufeinander aufgebrachten Aufbauschichten jeweils aufeinanderfolgend und abgestuft bei einem geringeren Füllstoffanteil entsprechend eine geringere Korngröße der Füllstoffe aufweisen.

3. Membrane nach Anspruch 1, **dadurch gekennzeichnet, daß** die Aufbauschichten nacheinander auf einer Seite des Trägerkörpers aufgebaut sind.

4. Membrane nach einem der Ansprüche 1 bis 3, **dadurch gekennzeichnet,**
   **daß** eine erste Aufbauschicht einen Bindemittelanteil von 15 Gew.% bis 20 Gew.% bei einem Füllstoffanteil von 80 Gew.% bis 85 Gew.% enthält, und
   **daß** eine zweite Aufbauschicht einen Bindemittelanteil von 30 Gew. % bis 35 Gew. % bei einem Füllstoffanteil von 65 Gew.% bis 70 Gew.% enthält.

5. Membrane nach Anspruch 4, **dadurch gekennzeichnet, daß** eine dritte Aufbauschicht einen Bindemittelanteil von 35 Gew.% bis 45 Gew.% bei einem Füllstoffanteil von 55 Gew.% bis 65 Gew.% enthält.

6. Membrane nach einem der Ansprüche 1 bis 5, **dadurch gekennzeichnet,**
   **daß** eine erste Aufbauschicht Korngrößen $d_1$ des Füllstoffs von

$$d_1 = 25\mu m \text{ im Mittel bei } 20\mu m < 25\mu m < 30\mu m$$

   und
   **daß** die zweite Aufbauschicht Korngrößen $d_2$ des Füllstoffs von

$$d_2 = 15\mu m \text{ im Mittel bei } 10\mu m < 15\mu m < 20\mu m$$

   aufweisen.

7. Membrane nach Anspruch 6, **dadurch gekennzeichnet, daß** eine dritte Aufbauschicht Korngrößen $d_3$ des Füllstoffs von

$$d_3 \leq 10 \ \mu m$$

   aufweist.

8. Membrane nach einem der Ansprüche 1 bis 7, **dadurch gekennzeichnet, daß** die letzte Aufbauschicht aus Bindemittel ohne Füllstoff besteht.

9. Membrane nach einem der Ansprüche 1 bis 8, **dadurch gekennzeichnet, daß** als Füllstoffe Oxide und/oder Keramiken und/oder Alaun und/oder Graphit und/oder feinstgemahlene, für den jeweiligen Einsatz geeignete Kunststoffe verwendet sind.

10. Membrane nach einem der Ansprüche 1 bis 9, **dadurch gekennzeichnet, daß** das Bindemittel aus hydrophilem Polysulfon besteht.

11. Membrane nach einem der Ansprüche 1 bis 9, **dadurch gekennzeichnet, daß** das Bindemittel aus hydrophilen Polyvinilidinfluoriden besteht.

12. Membrane nach einem der Ansprüche 1 bis 9, **dadurch gekennzeichnet, daß** das Bindemittel aus hydrophilen Polyaramlden besteht.

13. Membrane nach einem der Ansprüche 1 bis 9, **dadurch gekennzeichnet, daß** das Bindemittel aus hydrophilen Polyamiden besteht.

14. Membrane nach einem der Ansprüche 1 bis 9, **dadurch gekennzeichnet, daß** das Bindemittel aus hydrophilen Polyolefinen besteht.

15. Membrane nach einem der Ansprüche 1 bis 9, **dadurch gekennzeichnet, daß** das Bindemittel aus hydrophilen Polyimiden besteht.

16. Membrane nach einem der Ansprüche 1 bis 15, **dadurch gekennzeichnet, daß** das Trägermaterial aus Mikrosiebgewebe aus veredelten Metallen besteht.

17. Membrane nach einem der Ansprüche 1 bis 15, **dadurch gekennzeichnet, daß** das Trägermaterial aus Mikrosiebgewebe aus Kunststoffen besteht.

18. Membrane nach einem der Ansprüche 1 bis 15, **dadurch gekennzeichnet, daß** das Trägermaterial aus Keramikfiltern großer Porenweite besteht.

19. Membrane nach einem der Ansprüche 1 bis 15, **dadurch gekennzeichnet, daß** das Trägermaterial aus Kunststofffiltern großer Porenweite besteht.

20. Membrane nach einem der Ansprüche 1 bis 15, **dadurch gekennzeichnet, daß** das Trägermaterial aus Glasfasergewebe besteht.

21. Membrane nach einem der Ansprüche 1 bis 15, **dadurch gekennzeichnet, daß** das Trägermaterial aus textilen Vliesen besteht.

22. Membrane nach einem der Ansprüche 1 bis 15, **dadurch gekennzeichnet, daß** das Trägermaterial aus Vliesen auf Kunststoffbasis besteht.

**Claims**

1. Membrane in the form of a composite membrane for separating dissolved and suspended substances and also dissolved salts from their carrier liquid,
   consisting of a sheetlike carrier body having relatively large through openings and supporting a separating-function layer which has been applied to it layerwise and which consists of a composite formed from a granular filler and a binder,
   **characterized in that**
   the separating-function layer is formed in such a way of at least two superposingly interconnected build-up layers of differing structure that the build-up layers which have been applied atop each other atop the carrier body each successively and graduatedly contain a lower filler fraction and a correspondingly higher binder fraction compared with a preceding build-up layer.

2. Membrane according to Claim 1, **characterized in that** the build-up layers applied atop each other each successively and graduatedly have a lower filler fraction coupled with a smaller particle size for the fillers.

3. Membrane according to Claim 1, **characterized in that** the build-up layers have been successively built up on one side of the carrier body.

4. Membrane according to any of Claims 1 to 3, **characterized in that**
   a first build-up layer contains a binder fraction of 15% to 20% by weight coupled with a filler fraction of 80% to 85% by weight and
   a second build-up layer contains a binder fraction of 30% to 35% by weight coupled with a filler fraction of 65% to 70% by weight.

5. Membrane according to Claim 4, **characterized in that** a third build-up layer contains a binder fraction of 35% to 45% by weight coupled with a filler fraction of 55% to 65% by weight.

6. Membrane according to any of Claims 1 to 5, **characterized in** chat
a first build-up layer has filler particle sizes $d_1$ of

$$d_1 = 25 \ \mu m \text{ on average with } 20 \ \mu m < 25 \ \mu m < 30 \ \mu m$$

and
the second build-up layer has filler particle sizes $d_2$ of

$$d_2 = 15 \ \mu m \text{ on average with } 10 \ \mu m < 15 \ \mu m < 20 \ \mu m.$$

7. Membrane according to Claim 6, **characterized in that** a third build-up layer has filler particle sizes $d_3$ of

$$d_3 \leq 10 \ \mu m.$$

8. Membrane according to any of Claims 1 to 7, **characterized in that** the last build-up layer consists of binder without filler.

9. Membrane according to any of Claims 1 to 8, **characterized in that** the fillers used are oxides and/or ceramics and/or alum and/or graphite and/or very finely ground plastics suitable for the particular application.

10. Membrane according to any of Claims 1 to 9, **characterized in that** the binder consists of hydrophilic polysulphone.

11. Membrane according to any of Claims 1 to 9, **characterized in that** the binder consists of hydrophilic polyvinylidene fluorides.

12. Membrane according to any of Claims 1 to 9, **characterized in that** the binder consists of hydrophilic polyaramids.

13. Membrane according to any of Claims 1 to 9, **characterized in that** the binder consists of hydrophilic polyamides.

14. Membrane according to any of Claims 1 to 9, **characterized in that** the binder consists of hydrophilic polyolefins.

15. Membrane according to any of Claims 1 to 9, **characterized in that** the binder consists of hydrophilic polyimides.

16. Membrane according to any of Claims 1 to 15, **characterized in that** the carrier material consists of microsieve fabric woven from engineered metals.

17. Membrane according to any of Claims 1 to 15, **characterized in that** the carrier material consists of microsieve fabric woven from plastics.

18. Membrane according to any of Claims 1 to 15, **characterized in that** the carrier material consists of ceramic filters having a large pore size.

19. Membrane according to any of Claims 1 to 15, **characterized in that** the carrier material consists of plastics filters having a large pore size.

20. Membrane according to any of Claims 1 to 15, **characterized in that** the carrier material consists of woven glass fibre fabric.

21. Membrane according to any of Claims 1 to 15, **characterized in that** the carrier material consists of textile nonwovens.

22. Membrane according to any of Claims 1 to 15, **characterized in that** the carrier material consists of nonwovens based on plastics.

## Revendications

1. Membrane sous forme de membrane composite pour la séparation de matières dissoutes ou en suspension ainsi que de sels dissous, contenus dans un liquide véhicule,
   constituée d'un corps de support en nappe présentant des ouvertures de passage du liquide relativement grandes, et sur lequel on a appliqué, en couches, une couche à fonction séparatrice qui est constituée d'une composition constituée d'une charge granuleuse et d'un liant,
   **caractérisée en ce que**
   la couche à fonction séparatrice est formée d'au moins deux couches de structure qui présentent une structure différente et qui sont superposées et reliées entre elles, de sorte que chacune des couches de structure appliquées successivement sur le corps de support, contienne, de manière successive et échelonnée, une partie moindre de charge et une partie plus grande de liant proportionnellement à la couche de structure antérieure.

2. Membrane selon la revendication 1, **caractérisée en ce que** chacune des couches de structure appliquées l'une sur l'autre présente, de manière successive et échelonnée, une partie moindre de charge, et une granulométrie proportionnellement inférieure à la charge.

3. Membrane selon la revendication 1, **caractérisée en ce que** l'on applique les couches de structure de manière successive sur un même côté du corps de support.

4. Membrane selon l'une quelconque des revendications 1 à 3, **caractérisée**
   **en ce qu'**une première couche de structure contient une partie de liant à raison de 15% à 20% en poids pour une partie de charge de 80% à 85% en poids, et
   **en ce qu'**une deuxième couche de structure contient une partie de liant à raison de 30% à 35% en poids pour une partie de charge de 65% à 70% en poids.

5. Membrane selon la revendication 4, **caractérisée en ce qu'**une troisième couche de structure contient une partie de liant à raison de 35% à 45% en poids pour une partie de charge de 55% à 65% en poids.

6. Membrane selon l'une quelconque des revendications 1 à 5, **caractérisée**
   **en ce que** la première couche de structure présente une charge d'une granulométrie $d_1$ de

$$d_1 = 25 \ \mu m \text{ en moyenne avec } 20 \ \mu m < 25 \ \mu m < 30 \ \mu m$$

   et
   **en ce que** la deuxième couche de structure présente une charge d'une granulométrie $d_2$ de

$$d_2 = 15 \ \mu m \text{ en moyenne avec } 10 \ \mu m < 15 \ \mu m < 20 \ \mu m.$$

7. Membrane selon la revendication 6, **caractérisée en ce que** la troisième couche de structure présente une charge d'une granulométrie $d_3$ de

$$d_3 \leq 10 \ \mu m.$$

8. Membrane selon l'une quelconque des revendications 1 à 7, **caractérisée en ce que** la dernière couche de structure est constituée de liant et qu'elle est exempte de charge.

9. Membrane selon l'une quelconque des revendications 1 à 8, **caractérisée en ce que** l'on met en oeuvre, en tant que charge, des oxydes et/ou des céramiques et/ou de l'alun et/ou du graphite et/ou des matières synthétiques finement broyées appropriées à la mise en oeuvre.

10. Membrane selon l'une quelconque des revendications 1 à 9, **caractérisée en ce que** le liant est constitué de polysulfone hydrophile.

11. Membrane selon l'une quelconque des revendications 1 à 9, **caractérisée en ce que** le liant est constitué de poly (fluorures de vinylidène) hydrophiles.

12. Membrane selon l'une quelconque des revendications 1 à 9, **caractérisée en ce que** le liant est constitué de polyaramides hydrophiles.

13. Membrane selon l'une quelconque des revendications 1 à 9, **caractérisée en ce que** le liant est constitué de polyamides hydrophiles.

14. Membrane selon l'une quelconque des revendications 1 à 9, **caractérisée en ce que** le liant est constitué de polyoléfines hydrophiles.

15. Membrane selon l'une quelconque des revendications 1 à 9, **caractérisée en ce que** le liant est constitué de polyimides hydrophiles.

16. Membrane selon l'une quelconque des revendications 1 à 15, **caractérisée en ce que** la charge est constituée d'un tissu à micro-maille constitué de métaux affinés.

17. Membrane selon l'une quelconque des revendications 1 à 15, **caractérisée en ce que** la charge est constituée d'un tissu à micro-maille constitué de matières synthétiques.

18. Membrane selon l'une quelconque des revendications 1 à 15, **caractérisée en ce que** la charge est constituée de filtres céramiques présentant une taille de pores élevée.

19. Membrane selon l'une quelconque des revendications 1 à 15, **caractérisée en ce que** la charge est constituée de filtres de matière synthétique qui présentent une taille de pores élevée.

20. Membrane selon l'une quelconque des revendications 1 à 15, **caractérisée en ce que** la charge est constituée de tissu de fibres de verre.

21. Membrane selon l'une quelconque des revendications 1 à 15, **caractérisée en ce que** la charge est constituée de non-tissés textiles.

22. Membrane selon l'une quelconque des revendications 1 à 15, **caractérisée en ce que** la charge est constituée de non-tissés à base de matière synthétique.